# EUROPÄISCHE PATENTSCHRIFT

(11) **EP 3 017 674 B1**
(45) Veröffentlichungstag und Bekanntmachung des Hinweises auf die Patenterteilung: **30.01.2019**
(21) Anmeldenummer: 15401109.2
(22) Anmeldetag: 30.10.2015
(51) Int. Cl.: A01C 17/00, A01C 21/00

(54) **VERFAHREN ZUR MASSENSTROMBESTIMMUNG BEI EINER VERTEILMASCHINE**
METHOD FOR MEASURING THE MASS FLOW RATE OF A DISTRIBUTING MACHINE
PROCÉDÉ DE MESURE DE DÉBIT MASSIQUE D'UN ÉPANDEUR

(30) Priorität: 04.11.2014 DE 102014116020
(43) Veröffentlichungstag der Anmeldung: 11.05.2016
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Ströbel-Fröschle, Markus, 49124 Georgsmarienhütte (DE)

(56) Entgegenhaltungen:
- EP-A1- 2 756 745
- EP-A2- 2 767 149
- EP-A2- 2 777 376

## Beschreibung

Die Erfindung betrifft ein Verfahren zur Massenstrombestimmung bei einer Verteilmaschine gemäß dem Oberbegriff des Anspruchs 1.
Schleuderstreuer, im Allgemeinen ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt.
Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.
Die Menge des aufgebrachten Streugutes kann hierbei mittels verschiedener Verfahren gemessen und überwacht werden. So wird beispielsweise in der DE 198 13 289 B4 vorgeschlagen, den auf den Streuteller auftreffenden und ausgebrachten Massenstrom mittels der Messung einer belastungsabhängigen Druckdifferenz oder eines Drehmoments an dem den Streuteller antreibenden Hydromotor und Vergleich dieser zu einem Belastungskennfeld, welches von der Drehzahl des Streutellers abhängt, zu bestimmen. Anschließend wird mittels Vergleich mit einem Sollmassenstrom eine Regelung des Istmassenstromes ermöglicht. Die technischen Anforderungen, ein solches System in den Streutellerantrieb zu integrieren und die auftretenden Drehmomente bzw. Druckunterschiede mit ausreichender Genauigkeit zu Messen sind recht hoch. So wird typischerweise eine regelmäßige Eichung des Verfahrens mittels Messung des Leerlaufdrehmomentes während der Fahrt im Vorgewende durchgeführt, um die notwendige Präzision zu erreichen. Auch ist eine Mittelung des gemessenen Drehmomentes über viele Schleuderscheibenumdrehungen üblich, um ein genaueres Ergebnis zu erlangen.

Eine weitere Möglichkeit den auf die Schleuderscheibe auftreffenden Istmassenstrom zu bestimmen, ist eine Differenzmessung der Masse des Düngemittelbehälters einschließlich des Streugutes selbst mittels Wägezellen durchzuführen, wie dies beispielsweise in der Offenlegungsschrift DE 199 53 069 A1 vorgeschlagen wird. Nachteile dieses Verfahrens sind zum einen die relativ hohen Kosten dieser Lösung für einen zusätzlichen Behälterrahmen, da typischerweise die Gewichtskraft zwischen einem an die landwirtschaftliche Zugmaschine angehängten und einem direkt mit dem Vorratsbehälter verbundenen Rahmen gemessen wird. Da das komplette Behältergeweicht von typischerweise mehr als 1 t gemessen wird, der ausgebrachte Massenstrom jedoch von der Größenordnung 1 kg /s ist, sind außerdem die Anforderungen an die Genauigkeit der Massenbestimmung bzw. die zu erwartenden Ungenauigkeiten recht hoch. Zudem ist mit Fehlern in der Massenbestimmung durch die auf einer landwirtschaftlichen Fläche zu erwartenden Erschütterungen, hervorgerufen durch die Fahrt durch Schlaglöcher oder Spurrillen, oder bei der Fahrt an Hängen zu rechnen. Die vorgenannten Aspekte begründen die Tatsache, dass bei einer Massenbestimmung mittels Wägezelle eine im Vergleich lange Mittelungszeit für eine präzise Massenbestimmung eingehalten werden muss, was kurze Ansprechzeiten verhindert und die Regelung des Massenstromes relativ träge macht. Insbesondere zu Beginn des Verteilprozesses, wenn die tatsächliche Ausbringmenge noch nicht exakt bestimmt ist, ist ein derartiges Verhalten unerwünscht, da in dieser Phase über einen längeren Zeitraum, typischerweise > 10 s, mit nur ungenügend bekannter Ausbringmenge gearbeitet werden muss. Überdies sind zur weiteren Präzisierung der Messung, beispielsweise für die Arbeit am Hang, weitere Informationen und damit technische Vorrichtungen, wie Neigungssensoren, erforderlich.
Die EP 2 777 376 A2 offenbart überdies verschiedene Einstellparameter der Verteilmaschine anhand von mit Radarsensoren ermittelten Abwurfparametern einzustellen. Hierbei wird anhand der Radarsensoren insbesondere der mittlere Abwurfwinkel des Streugutes als Abwurfparameter ermittelt. Eine ähnliche Verteilmaschine ist aus EP 2 777 376 bekannt. Aufgabe der vorliegenden Erfindung ist es, eine kostengünstige, konstruktiv weniger aufwendige und dabei ausreichend präzise Bestimmung des Massenstroms einer landwirtschaftlichen Verteilmaschine zu ermöglichen.
Dies wird durch ein Verfahren zur Massenstrombestimmung bei einer Verteilmaschine mit Hilfe zumindest eines Radarsensors gemäß dem Oberbegriff des Patentanspruchs 1 erreicht, wobei eine dem Massenstrom des verteilten Streugutes proportionale Größe aus der Amplitude des von dem Streugut reflektierten Radarsignals bestimmt wird. Hiermit kann auf einfache Weise der Massenstrom des Streugutes an Hand der Amplitude eines Radarsignals elektronisch bestimmt werden. Eine Anordnung mehrerer derartiger Radarsensoren wird typischerweise bei landwirtschaftlichen Verteilmaschinen verwendet, um die Richtung des ausgebrachten Streugutes in horizontaler Ebene zu bestimmen und hieraus die Arbeitsbreite abzuleiten. Eine solche bekannte Anordnung kann nun benutzt werden, um daraus den momentanen Massenstrom zu bestimmen. Insbesondere kann diese Anordnung nun besonders vorteilhaft genutzt werden, um entweder aus dem Messsignal, welches zur Bestimmung der Wurfrichtung dient ebenfalls ein Signal zu generieren, aus dem sich der Massenstrom des ausgebrachten Streugutes ermitteln lässt, oder in abwechselnder Messung mit für den jeweiligen Anwendungsfall ausreichender Frequenz dieselben Sensoren zu verwenden, um entweder die Wurfrichtung oder den Massenstrom des Streugutes zu ermitteln. Somit kann auf vorhandene Sensoren für die Massenstrombestimmung zurückgegriffen werden. Lediglich die Ansteuerung der Sensoren und die Auswertung des Sensorsignals muss modifiziert werden.

In einer vorteilhaften Weiterbildung der Erfindung wird für eine Verteilmaschine mit zumindest zwei Schleuderscheiben und zumindest zwei Vorrichtungen zum Öffnen und Schließen der Zuführvorrichtung für das Streugut und zumindest zwei an der Verteilmaschine angeordneten Radarsensoren die dem Massenstrom des verteilten Streugutes proportionale Größe für jede der zumindest zwei Schleuderscheiben separat bestimmt. Eine solche separate Bestimmung des Massenstromes ermöglicht einerseits eine präzisere Einstellung und Abstimmung der Zuführvorrichtungen der Schleuderscheiben, für den Fall dass beispielsweise die Zuführvorrichtungen auf Regeländerungen unterschiedlich ansprechen. In diesem Fall ist es vorteilhaft die Regelung der Zuführvorrichtungen jeweils individuell auf den Massenstromabstimmen zu können. Andererseits ist diese Ausgestaltung besonders vorteilhaft um Verstopfungen zu detektieren, welche naturgemäß vorzugsweise einseitig auftreten. Bei einer spontan auftretenden Verstopfung würde, falls der Massenstrom nicht individuell für jede Schleuderscheibe detektiert würde, lediglich eine Reduktion des Massenstromes gemessen, so dass bei einer typischen Regelung als Folge jede der vorhandenen Zuführvorrichtungen der Schleuderscheiben geöffnet würden. Dies ist analog zu einer Bestimmung des Massenstromes mittels Wägezellen, bei denen ebenfalls lediglich eine Abnahme des Massenstroms detektierbar ist. Bei Messung des Massenstromes individuell für jede Schleuderscheibe mittels Radarsensoren würde bei einer starken Abnahme des Massenstromes einer der Schleuderscheiben nur diese weiter geöffnet, um einer potentiellen Verstopfung zu begegnen.

Betreffend die Erkennung von Massenstromreduktionen durch Verstopfungen wird bei einer unvorhergesehenen, also nicht durch Betätigung der Vorrichtung zum Öffnen und Schließen der Zuführvorrichtung bewirkten, Reduktion der dem Massenstrom des verteilten Streugutes proportionalen Größe der zumindest einen Schleuderscheibe und/oder der unvorhergesehenen Reduktion der Summe der Massenströme des verteilten Streugutes von zumindest zwei Schleuderscheiben unter Berücksichtigung der übrigen Streuparameter, wie vorzugsweise Schleuderscheibendrehzahl und/oder Auftreffpunkt des Streugutes auf die Schleuderscheibe, welche Reduktion auf eine Verstopfung der Zuführvorrichtung oder auf einen leeren Streugutbehälter schließen lässt, ein akustischer und/oder optischer Hinweis auf einer geeigneten Anzeigevorrichtung ausgegeben und/oder die zumindest eine Vorrichtung zum Öffnen und Schließen der zumindest einen Zuführvorrichtung des Streugutes für die entsprechende zumindest eine Schleuderscheibe automatisch geöffnet, um den ursprünglichen und gewünschten Massenstrom wiederherzustellen. Auf diese Weise wird auftretenden Verstopfungen gezielt begegnet nämlich indem eine auftretende Verstopfung gezielt detektiert wird und nicht analog zu einer kleinen Veränderung des Massenstromes in einem Standardregelungsmodus verblieben wird. Zusätzlich wird bei einer Detektion einer solchen Verstopfung und/oder einem Leerlaufen des Vorratsbehälters ein entsprechendes Warnsignal an den Fahrer/Nutzer der landwirtschaftlichen Verteilmaschine gegeben.

In einer vorteilhaften Ausgestaltung der Erfindung wird der Massenstrom der zumindest einen Schleuderscheibe und/oder der Massenstrom, welcher in Summe von allen Streuscheiben ausgebracht wird, durch Umrechnung der dem Massenstrom proportionalen Größe mittels einer zuvor bestimmten Tabelle, einer mathematischen Funktion oder eines Graphen berechnet. Hierdurch kann in vorteilhafter Weise dem gemessenen Amplitudensignal des Radarsensors eine Masse zugeordnet werden. Die hierfür benötigte Umrechungsvorschrift, beispielsweise ein Graph, eine Tabelle oder eine Funktion wird typischerweise zuvor mittels einer Eichmessung ermittelt.

In einer möglichen Weiterbildung der Erfindung verfügt die Verteilmaschine über eine Wiegeeinrichtung zur Bestimmung der Masse des in dem Streugutbehälter befindlichen Streugutes und die Umrechnungsvorschrift, mittels der der Massenstrom aus der dem Massenstrom proportionalen Größe berechnet werden kann, wird durch Vergleich der zeitlichen Massenänderung des Streugutes im Streugutbehälter mit der dem Massenstrom proportionalen Größe über einen festgelegten Zeitraum bestimmt. Hierdurch kann beispielsweise die zuvor erwähnte Umrechnungsvorschrift vorteilhaft mittels einer an der Verteilmaschine befindlichen Wiegeeinrichtung ermittelt werden. Dieses Verfahren erhöht zum einen die Messgenauigkeit des Massenstromes. Darüber hinaus kann auf eine vorhergehende Eichung des Amplitudensignals des Radarsensors verzichtet werden. Zudem ist eine Verstopfungsdetektion mittels der Radarsensoren möglich, was die Wiegeeinrichtung allein nicht ermöglichen würde.

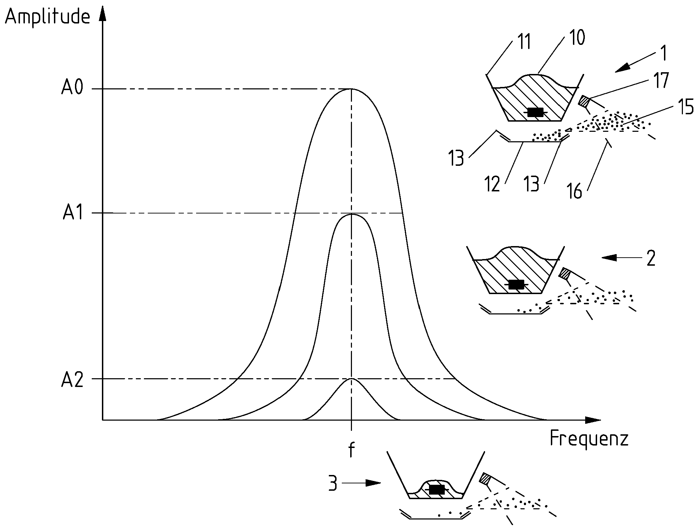

Weitere Einzelheiten der Erfindung sind der Beispielsbeschreibung zu entnehmen. Die Zeichnung zeigt
ein schematisches Diagramm mit verschiedenen Radarsignalamplituden entsprechend der jeweiligen Ausbringmenge.

Zur Charakterisierung der ausgebrachten Streugutmenge wird das von der Schleuderscheibe abgeworfene Streugut mit Radarwellen beschienen. Das zurückreflektierte/ -gestreute Signal wird anschließend von einem Detektor gemessen. Wie in den Prinzipskizzen 1-3 angedeutet wird entsprechend des erfindungsgemäßen Verfahrens Streugut 10, welches sich in einem Streugutbehälter 11 befindet auf zumindest eine Schleuderscheibe 12 aufgebracht und mittels dieser sowie den auf der Scheibe angeordneten Wurfschaufeln 13 abgeworfen. Der Strahl des abgeworfenen Streugutes 15 passiert den Messbereich 16 eines Radarsensors 17, so dass das abgeworfene Streugut wie oben beschrieben vermessen werden kann. Die in den Prinzipskizzen dargestellten Vorrichtungen können Teil einer Verteilmaschine mit jeweils einem oder mehreren Streugutbehältern, Schleuderscheiben, Dosiervorrichtungen zum Dosieren der Menge des ausgebrachten Streugutes und Radarsensoren sein, wobei vorzugsweise für jede Schleuderschiebe zumindest ein Radarsensor vorhanden ist.

Typischerweise wird die Amplitude des gemessenen Radarsignals in Abhängigkeit der jeweiligen Frequenz aufgetragen und ausgewertet, wobei das Radarsignal eine gaussartige Form mit einem Maximum bei der Frequenz f aufweist, welche von der Frequenz f₀ der ungestörten Radarstrahlen auf Grund des Dopplereffektes abweicht und die Abweichung zu größeren oder kleineren Frequenzen im Vergleich zu f₀ von der Orientierung des Radarsensors relativ zur Flugrichtung des Streugutes abhängt.

Zur Anwendung des erfindungsgemäßen Verfahrens wird nun die Höhe des Radarsignals zur Bestimmung einer absoluten oder relativen Ausbringmenge verwendet. Beispielsweise kann das Radarsignal verwendet werden, um die Ausbringmenge anhand eines bekannten Sollwertes, beispielsweise A₀, der Radarsignalamplitude zu regeln. Wird ein von dem Wert A₀ abweichender Wert, beispielweise die niedrigere Amplitude A₁ detektiert, so würde die Ausbringmenge auf die Schleuderscheibe vorzugsweise durch Öffnen eines entsprechend ansteuerbaren Dosierschiebers erhöht. Für die Betätigung des Dosierschiebers würde in der Regelung vorzugsweise ein Schwellwert hinterlegt, welcher definiert, ab welcher Abweichung, beispielsweise 1%, vom Sollwert eine Regelung des Dosierschiebers vorgenommen werden soll.

Außerdem ist denkbar, dass nicht auf eine relative Ausbringmenge geregelt wird, sondern dem Amplitudenwert mittels Eichung des Radarsensors, beispielsweise mittels eines Wägerahmens, jedem Amplitudenwert eine absolute Ausbringmenge zugeordnet und vorzugsweise dem Fahrer der landwirtschaftlichen Maschine bzw. dem Bedienpersonal der Verteilmaschine angezeigt wird.

Bei einem starken Abfall der Ausbringmenge entsprechend Amplitude A₂ kann auf ein Leerlaufen des entsprechenden Streugutbehälters wie in Prinzipskizze 3 oder eine Verstopfung der Auslassöffnung geschlossen werden. In diesem Fall ist es denkbar, dass Maßnahmen abweichend von der normalen Mengenregelung getroffen werden. Beispielsweise kann zur Beseitigung von Verstopfungen der jeweilige Dosierschieber entsprechend einer vorher definierten Routine für einen begrenzten Zeitraum, beispielsweise 2 s, vollständig geöffnet werden oder es können dem Bedienpersonal entsprechende Hinweise auf einer Anzeigevorrichtung gegeben werden. Die Erkennung eines Verstopfungs- und/oder Leerlaufzustandes kann anhand der Mengenänderung oder der Ausbringmenge erfolgen. So können beispielsweise Grenzwerte definiert werden, ab denen auf einen Verstopfungszustand oder ein Leerlaufen des Behälters geschlossen werden kann. Dies kann für die Mengenänderung ein Wert von 10%/s und für die Ausbringmenge ein Wert von 50% vom Sollwert sein. Auch können zur Unterscheidung von Leerlauf und Verstopfungsprozessen verschiedene Grenzwerte definiert werden unter der Annahme, dass bei einer Verstopfung der Abfall der Ausbringmenge schneller erfolgt als bei einem Leerlaufen des Behälters. Ein anderes Unterscheidungsmerkmal für Verteilmaschinen mit zumindest zwei Schleuderscheiben, welches in der Regelung berücksichtigt werden kann, ist, dass Verstopfungen zumeist einseitig auftreten ein Leerlaufen des Behälters mit geringer Verzögerung aber gewöhnlich beidseitig auftritt.

Die Auswertung der Frequenz des Radarsignals beispielsweise zur Bestimmung der Abwurfgeschwindigkeit und/oder Wurfweite ist denkbar, aber nicht Teil des erfindungsgemäßen Verfahrens.

## Patentansprüche

1. Verfahren zur Detektion des Massenstroms des durch zumindest eine Schleuderscheibe (12) einer landwirtschaftlichen Verteilmaschine (1) ausgebrachten Streugutes (15), insbesondere Düngers, wobei die Verteilmaschine über zumindest einen Radarsensor (17), der von dem Streugut (15) reflektierte Radarsignale empfängt, und zumindest einen Streugutbehälter (11) und zumindest eine Vorrichtung zum Öffnen und Schließen einer Zuführvorrichtung für das Streugut auf die zumindest eine Schleuderscheibe (12) verfügt, wobei eine dem Massenstrom des verteilten Streugutes (15) proportionale Größe aus der Amplitude des von dem Streugut reflektierten Radarsignals bestimmt wird, **dadurch gekennzeichnet, dass** bei einer unvorhergesehenen, also nicht durch Betätigung der Vorrichtung zum Öffnen und Schließen der Zuführvorrichtung bewirkten, Reduktion der dem Massenstrom des verteilten Streugutes (15) proportionalen Größe der zumindest einen Schleuderscheibe (12) und/oder der unvorhergesehenen Reduktion der Summe der Massenströme des verteilten Streugutes (15) von zumindest zwei Schleuderscheiben (12) unter Berücksichtigung der übrigen Streuparameter, wie vorzugsweise Schleuderscheibendrehzahl und/oder Auftreffpunkt des Streugutes auf die Schleuderscheibe (12), welche Reduktion auf eine Verstopfung der Zuführvorrichtung oder auf einen leeren Streugutbehälter (11) schließen lässt, ein akustischer und/oder optischer Hinweis auf einer geeigneten Anzeigevorrichtung ausgegeben wird und/oder die zumindest eine Vorrichtung zum Öffnen und Schließen der zumindest einen Zuführvorrichtung des Streugutes für die entsprechende zumindest eine Schleuderscheibe (12) automatisch geöffnet wird, um den ursprünglichen und gewünschten Massenstrom wiederherzustellen.

2. Verfahren nach Anspruch 1 für eine Verteilmaschine (1) mit zumindest zwei Schleuderscheiben (12) und zumindest zwei Vorrichtungen zum Öffnen und Schließen der Zuführvorrichtung für das Streugut und zumindest zwei an der Verteilmaschine angeordneten Radarsensoren (17), wobei die Anzahl der Radarsensoren (17) mindestens der Anzahl der Schleuderscheiben (12) entspricht, **dadurch gekennzeichnet, dass** die dem Massenstrom des verteilten Streugutes (15) proportionale Größe für jede der zumindest zwei Schleuderscheiben (12) separat bestimmt wird.

3. Verfahren nach zumindest einem der Ansprüche 1 bis 2, **dadurch gekennzeichnet, dass** der Massenstrom der zumindest einen Schleuderscheibe (12) und/oder der Massenstrom, welcher in Summe von allen Schleuderscheiben (12) ausgebracht wird, durch Umrechnung der dem Massenstrom proportionalen Größe mittels einer zuvor bestimmten Tabelle, einer mathematischen Funktion oder eines Graphen berechnet wird.

4. Verfahren nach zumindest einem der Ansprüche 1 bis 3 für eine Verteilmaschine, welche über eine Wiegeeinrichtung zur Bestimmung der Masse des in dem Streugutbehälter (11) befindlichen Streugutes (10) verfügt, **dadurch gekennzeichnet, dass** die Umrechnungsvorschrift, mittels der der Massenstrom aus der dem Massenstrom proportionalen Größe berechnet werden kann, durch Vergleich der zeitlichen Massenänderung des Streugutes (10) im Streugutbehälter (11) mit der dem Massenstrom proportionalen Größe über einen festgelegten Zeitraum bestimmt wird.

## Claims

1. Method for detecting the mass flow rate of the spreading material (15), in particular fertilizer, which is discharged by means of at least one centrifugal disc (12) of an agricultural distributor machine (1), wherein the distributor machine has at least one radar sensor (17), which receives radar signals reflected by the spreading material (15), and at least one spreading material container (11) and at least one device for opening and closing a feed device for the spreading material applied to the at least one centrifugal disc (12), wherein a variable, which is proportional to the mass flow rate of the distributed spreading material (15), is determined from the amplitude of the radar signal which is reflected by the spreading material, **characterized in that**
in the event of a reduction which is unforeseen, that is to say is not brought about by activation of the device for opening and closing the feed device, in the variable of the at least one centrifugal disc (12) which is proportional to the mass flow rate of the distributed spreading material (15) and/or in the event of the unforeseen reduction in the sum of the mass flow rates of the distributed spreading material (15) of at least two centrifugal discs (12) taking into account the other spreading parameters such as, preferably, the rotational speed of the centrifugal disc and/or impact point of the spreading material on the centrifugal disc (12), which reduction permits a blockage in the feed device or an empty spreading material container (11) to be inferred, an audible and/or visual indication is issued at a suitable indicator device and/or the at least one device for opening and closing the at least one feed device of the spreading material for the corresponding at least one centrifugal disc (12) is opened automatically, in order to restore the original and desired mass flow rate.

2. Method according to Claim 1 for a distributor machine (1) having at least two centrifugal discs (12) and at least two devices for opening and closing the feed device for the spreading material and at least two radar sensors (17) which are arranged on the distributor machine, wherein the number of radar sensors (17) corresponds at least to the number of centrifugal discs (12), **characterized in that** the variable for each of the at least two centrifugal discs (12), which is proportional to the mass flow rate of the distributed spreading material (15), is determined separately.

3. Method according to at least one of Claims 1 to 2, **characterized in that**
the mass flow rate of the at least one centrifugal disc (12) and/or the mass flow rate which is discharged in total by all the centrifugal discs (12) is calculated by converting the variable which is proportional to the mass flow rate by means of a previously determined table, a mathematical function or a graph.

4. Method according to at least one of Claims 1 to 3 for a distributor machine which has a weighing device for determining the mass of the spreading material (10) which is located in the spreading material container (11), **characterized in that** the conversion rule by means of which the mass flow rate can be calculated from the variable which is proportional to the mass flow rate is determined by comparing the change in mass of the spreading material (10) in the spreading material container (11) over time with the variable which is proportional to the mass flow rate over a defined time period.

## Revendications

1. Procédé de détection du débit massique du produit d'épandage (15), en particulier d'engrais, délivré par au moins un disque centrifuge (12) d'une machine de distribution agricole (1), la machine de distribution disposant d'au moins un capteur radar (17), qui reçoit des signaux radar réfléchis par le produit d'épandage (15), et d'au moins un récipient de produit d'épandage (11) et d'au moins un dispositif d'ouverture et de fermeture d'un dispositif d'alimentation en produit d'épandage sur l'au moins un disque centrifuge (12), une grandeur proportionnelle au débit massique du produit d'épandage distribué (15) étant déterminée à partir de l'amplitude du signal radar réfléchi par le produit d'épandage,
**caractérisé en ce que**
en cas de réduction imprévue, donc non provoquée par l'actionnement du dispositif d'ouverture et de fermeture du dispositif d'alimentation, de la grandeur proportionnelle au débit massique du produit d'épandage distribué (15) au niveau de l'au moins un disque centrifuge (12) et/ou en cas de réduction imprévue de la somme des débits massiques du produit d'épandage distribué (15) au niveau d'au moins deux disques centrifuges (12),
une indication acoustique et/ou optique est délivrée à un dispositif d'affichage approprié et/ou l'au moins un dispositif d'ouverture et de fermeture de l'au moins un dispositif d'alimentation du produit d'épandage est ouvert automatiquement pour l'au moins un disque centrifuge (12) correspondant, en tenant compte des autres paramètres d'épandage, tels que de préférence la vitesse en rotation du disque d'épandage et/ou le point d'impact du produit d'épandage sur le disque centrifuge (12), laquelle réduction permet de conclure à l'engorgement du dispositif d'alimentation ou à un récipient de produit d'épandage vide (11), pour rétablir le débit massique d'origine et souhaité.

2. Procédé selon la revendication 1 destiné à une machine de distribution (1) comprenant au moins deux disques centrifuges (12) et au moins deux dispositifs d'ouverture et de fermeture du dispositif d'alimentation en produit d'épandage et au moins deux capteurs radar (17) disposés au niveau de la machine de distribution, le nombre de capteurs radar (17) correspond au moins au nombre de disques centrifuges (12), **caractérisé en ce que** la grandeur proportionnelle au débit massique du produit d'épandage distribué (15) est déterminée séparément pour chacun des au moins deux disques centrifuges (12).

3. Procédé selon l'une au moins des revendications 1 et 2, **caractérisé en ce que** le débit massique de l'au moins un disque centrifuge (12) et/ou le débit massique, délivré au total par tous les disques centrifuges (12), est calculé par conversion de la grandeur proportionnelle au débit massique au moyen d'un tableau préalablement déterminé d'une fonction mathématique ou d'un graphique.

4. Procédé selon l'une au moins des revendications 1 à 3 destiné à une machine de distribution comportant un dispositif de pesage destiné à déterminer la masse du produit d'épandage (10) se trouvant dans le récipient de produit d'épandage (11), **caractérisé en ce que** la règle de conversion, permettant de calculer le débit massique à partir de la grandeur proportionnelle au débit massique, est déterminée par comparaison de la variation dans le temps de la masse du produit d'épandage (10) dans le récipient de produit d'épandage (11) avec la grandeur proportionnelle au débit massique sur un intervalle de temps spécifié.
